# EUROPEAN PATENT SPECIFICATION

(11) **EP 4 060 170 B1**
(45) Date of publication and mention of the grant of the patent: **22.11.2023**
(21) Application number: 21163312.8
(22) Date of filing: 18.03.2021
(51) Int. Cl.: F01N 13/18

(54) **ALIGNMENT TOOL FOR FLEXIBLE TUBE FITTING**
AUSRICHTWERKZEUG FÜR DEN EINBAU EINES FLEXSCHLAUCHES
OUTIL D'ALIGNEMENT POUR LE MONTAGE D'UN TUYAU FLEXIBLE

(43) Date of publication of application: 21.09.2022
(73) Proprietor: Volvo Bus Corporation, 405 08 Göteborg (SE)
(72) Inventor: WALLENBERG, Sebastian, 413 05 Göteborg (SE); SVENSÉN, Daniel, 534 94 Halland (SE)
(74) Representative: Zacco Sweden AB

(56) References cited:
- WO-A1-03/011678
- CN-U- 206 317 683
- DE-A1-102009 032 527
- DE-U1- 20 013 124
- FR-A1- 2 937 015
- US-A1- 2010 154 397
- US-A1- 2012 318 371
- US-A1- 2013 037 764

## Description

### TECHNICAL FIELD

The present invention relates to an alignment tool to be used when mounting a flexible tube between two adjustable pipe ends. By using the alignment tool, the mechanical stress on the flexible tube can be reduced. The alignment tool may e.g. be used when connecting an exhaust manifold to e.g. an exhaust pipe or a silencer with a flexible exhaust tube.

### BACKGROUND ART

Heavy vehicles, such as trucks, busses, construction equipment vehicles and others, are mostly provided with a larger diesel engine. The diesel engine is suspended in the chassis with vibration dampers in order to reduce vibrations from the engine and to minimize the propagation of vibrations into the vehicle. In some vehicles, the exhaust pipe and parts of the exhaust system may be attached to another part of the vehicle, where the chassis and the other part are movable with respect to each other.

Such an example is a truck, where the engine is suspended in the chassis and the exhaust pipe is attached to the rear of the cabin. The cabin is suspended on the chassis with springs and dampers in order to reduce vibrations from e.g. an uneven road acting on the cabin. The relative movement between the chassis and the cabin may be relatively large, and necessitates the use of a flexible metal exhaust tube in the exhaust system of the truck, in order to reduce vibrations from the engine to the exhaust system and to avoid that the exhaust pipe brakes. Without a flexible exhaust tube, the complete exhaust system would have to move with the engine and not with the cabin.

One problem with a flexible exhaust tube is that it is exposed to severe stress due to vibrations from the engine, relative movement between engine and cabin, and heat from the exhaust gas. This means that the flexible exhaust tube must be replaced every now and then, which takes time and cost. It is thus of advantage to be able to mount the flexible tube in an optimal manner in order to reduce the stress imposed on the flexible tube.

US20150211666 discloses an alignment device for use in aligning and positioning two stiff pipes with pipe ends before joining them together using a mechanical locking device that completely surrounds the pipe ends. This alignment device fixates the two rigid pipe ends relative each other, such that the mechanical locking device can be attached.

DE 20013124 U1 and FR 2937015 A discloses a protection device arranged to protect a flexible tube during transportation and mounting of the flexible tube by enclosing the flexible tube completely. US 2012/0318371 A1 discloses a protection device that that can be used to protect a flexible tube during transportation and to align a flexible tube during mounting of the flexible tube.

There is thus room for an improved alignment tool adapted for flexible tubes.

### DISCLOSURE OF INVENTION

An object of the invention is therefore to provide an alignment tool for mounting a flexible tube between two pipe ends. A further object of the invention is to provide an improved method for mounting a flexible tube between two pipe ends.

The solution to the problem according to the invention is described in the characterizing part of claim 1 regarding the alignment tool and in claim 11 regarding the method. The other claims contain advantageous further developments of the inventive alignment tool and method.

In an alignment tool for mounting a flexible tube between a first pipe end and a second pipe end, where the alignment tool is adapted to be used to align the first pipe end to the second pipe end, the object of the invention is achieved in that the alignment tool is provided with a single semi-circular body having a diameter corresponding to the diameter of the flexible tube, where the length of the alignment tool corresponds to the length of the flexible tube, and that the alignment tool is adapted to bear on the flexible tube during the mounting of the flexible tube between the first pipe end and the second pipe end.

With the alignment tool according to the invention, the flexible tube can be mounted in an optimal position between the first pipe end and the second pipe end. In the optimal position, the first pipe end and the second pipe end are aligned to each other, such that the flexible tube can be mounted between them in an unloaded manner, without any forces acting on the flexible tube in any direction. In this way, the flexible tube will be mounted in a straight state between the first pipe end and the second pipe end. By mounting the flexible tube in a straight state, the side forces that will act on the flexible tube during use will be minimized, and the maximal deflection of the flexible tube will be minimized.

The alignment tool is semi-circular with a length that corresponds to the length of the flexible tube, which corresponds roughly to the distance between the first pipe end and the second pipe end. The body of the alignment tool may be rounded or substantially rounded. The diameter of the alignment tool corresponds to the diameter of the flexible tube. In this way, the alignment tool will bear on the flexible tube when it is attached to the flexible tube, and will hold the flexible tube in a straight state. The semi-circular shape will ensure that the flexible tube is supported in a horizontal, sideway direction. By attaching the alignment tool with an attachment means to the flexible tube, the alignment tool will also support the flexible tube in a vertical direction. The flexible tube is relatively stiff but still bendable. The flexible tube may e.g. be a double-braided exhaust pipe having rigid end flanges. The alignment tool will hold the flexible tube in a straight state during mounting of the flexible tube.

By holding the flexible tube in a straight state, the first pipe end and the second pipe end can be clamped in a position in which they are aligned to each other, such that the flexible tube will remain straight when the alignment tool is removed. This will ensure that the stress imposed on the flexible tube during use will be minimized, and that the deflection of the flexible tube is minimized during use. This will reduce the wear of the flexible tube, and will thus prolong the life of the flexible tube.

The alignment tool is attached to the flexible tube with an attachment means in a removable manner. The attachment means may be disposable or reusable. In one example, the alignment tool is attached to the flexible tube with a disposable cable tie. The cable tie is strong enough to hold the flexible tube in a straight state during the mounting process. The alignment tool may also be attached to the flexible tube with a reusable strap having e.g. a quick release buckle. The alignment tool may also be attached to the flexible tube with two or more attachment means.

The alignment tool is in one example provided with a handle that simplifies the handling of the alignment tool. The handle is provided with an opening through which the attachment means may be threaded. The alignment tool is in one example provided with protrusions or edges at the ends of the alignment tool, pointing inwards from the inner side. The protrusions or edges are adapted to correspond with the end regions of the flexible tube, which e.g. are stiff flanges. This will ensure that the alignment tool is positioned in the proper lengthwise position on the flexible tube.

In a method for mounting a flexible tube between a first pipe end and a second pipe end, the steps of; placing a flexible tube between the first pipe end and the second pipe end; attaching an alignment tool to the flexible tube with an attachment means in a removable manner, such that the flexible tube is held in a straight position; aligning the first pipe end to the second pipe end by adjusting the position of at least one pipe end, such that they are aligned to each other; clamping at least one pipe end in the aligned position; clamping the flexible tube to at least one pipe end; and removing the alignment tool from the flexible tube are comprised.

By this first embodiment of the method, the flexible tube can be mounted in an optimal position between the first pipe end and the second pipe end. In the optimal position, the first pipe end and the second pipe end are aligned to each other, such that the flexible tube can be mounted between them in an unloaded manner, without any force acting on the flexible tube in any direction. In this way, the flexible tube will be mounted in a straight state between the first pipe end and the second pipe end. By mounting the flexible tube in a straight state, the side forces that will act on the flexible tube during use will be minimized, and the maximal deflection of the flexible tube will be minimized.

### BRIEF DESCRIPTION OF DRAWINGS

The invention will be described in greater detail in the following, with reference to the attached drawings, in which
- Fig. 1: shows an example of an alignment tool according to the invention,
- Fig. 2: shows an alignment tool attached to a flexible tube,
- Fig. 3: shows a flexible tube mounted between two pipe ends, and
- Fig. 4: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims.

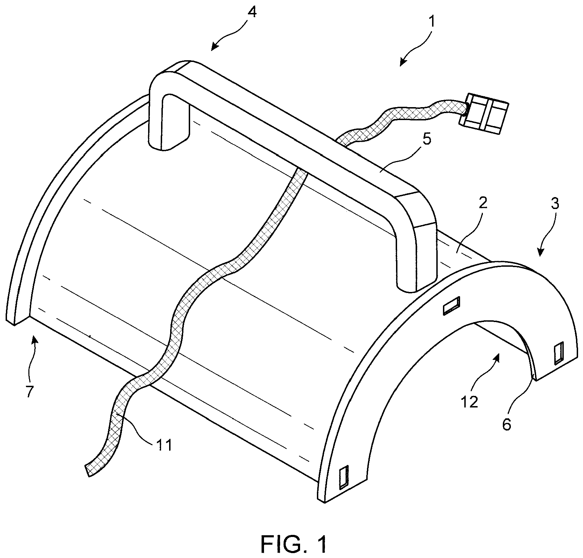

Fig. 1 shows an alignment tool 1 for mounting a flexible tube 8 between a first curved pipe 13 having a first pipe end 9 and a second curved pipe 14 having a second pipe end 10, where the alignment tool 1 is used to align the first pipe end 9 to the second pipe end 10. The alignment tool 1 is provided with a semi-circular body 2 having a diameter corresponding to the diameter of the flexible tube 8, and the length of the alignment tool 1 corresponds to the length of the flexible tube 8. The surface of the body is rounded or substantially rounded. When the alignment tool is attached to the flexible tube, the alignment tool will bear on the flexible tube during the mounting of the flexible tube between the first pipe end 9 and the second pipe end 10, such that the flexible tube is held in a straight manner.

The body 2 of the alignment tool 1 is semi-circular such that it will enclose half of the flexible tube. In this way, the flexible tube can be securely held in a straight manner, and it is easy to attach the alignment tool to the flexible tube and to remove the alignment tool from the flexible tube. With a body that extends around the flexible tube by 180 degrees, the flexible tube is held securely in a sideway direction between the two side edges of the alignment tool. The surface of the body 2 of the alignment tool 1 may be closed or may comprise openings.

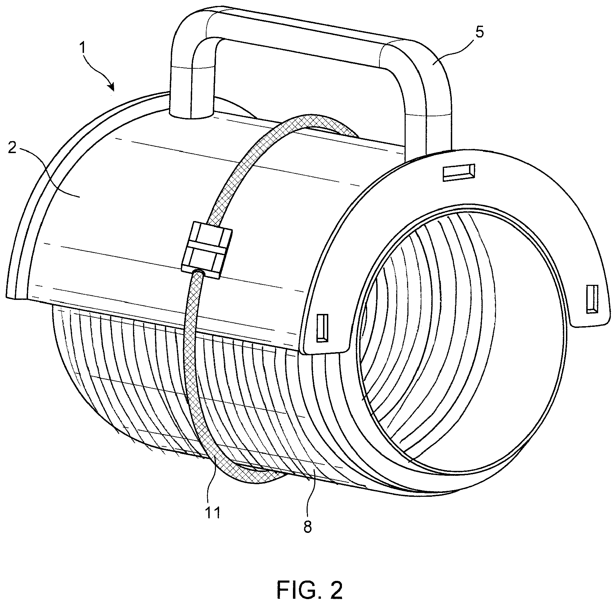

The alignment tool 1 is attached to the flexible tube 8 with an attachment means 11 in a removable manner. Fig. 2 shows an example where an alignment tool 1 is attached to a flexible tube 8. The attachment means is in one example a disposable attachment means, such as a cable tie. A cable tie is strong enough to hold the flexible tube in a straight state during the mounting process, and can easily be cut with a plier when the alignment tool is to be removed. In another example, the alignment tool is attached to the flexible tube with a reusable strap having e.g. a quick release buckle. If the flexible tube is somewhat bent or curved before the mounting, it is possible to attach the alignment tool to the flexible tube with two or three attachment means.

The alignment tool is in the shown example provided with a handle 5 that simplifies the handling of the alignment tool. The handle is provided with an opening through which the attachment means can be threaded. When a reusable attachment means is used, the opening can be used to secure the attachment means to the alignment tool, such that it does not fall off. The alignment tool is in the shown example provided with protrusions or edges extending from the inner side 12 of the body, a first protrusion 6 at the first end 3 of the alignment tool and a second protrusion 7 at the second end 4 of the alignment tool. The protrusions are adapted to correspond with the end regions of the flexible tube, which e.g. are stiff flanges. This will ensure that the alignment tool is positioned in the proper lengthwise position on the flexible tube.

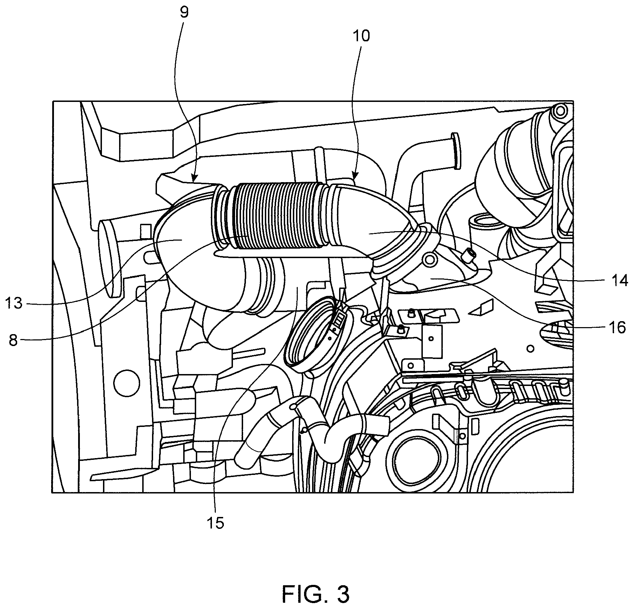

The flexible tube is in the example shown in Fig. 3 part of the exhaust system of a truck or buss and is adapted to provide a flexible link between moving parts of the exhaust system. The engine may e.g. move due to vibrations and the exhaust system may not move in the same way, due e.g. to different suspension systems. It is thus important that the flexible tube can compensate for these movements such that the exhaust system does not break down.

In the exhaust system, the exhaust manifold 15 is mounted to the engine in a fixed way. A first curved pipe 13 is mounted to the exhaust manifold 15 or a turbo mounted to the exhaust manifold, and the flexible tube is mounted to the first curved pipe 13. In one example, the first curved pipe is fixedly mounted to the exhaust manifold or turbo, e.g. by clamping or welding. The flexible tube is fixedly mounted to the first curved pipe, e.g. by clamping or welding.

In another example, the first curved pipe 13 is mounted to the exhaust manifold 15 or a turbo mounted to the exhaust manifold in an adjustable manner, and the flexible tube is mounted to the first curved pipe 13 in an adjustable manner. The first curved pipe can be rotated with respect to the exhaust manifold such that the position of the first pipe end can be set in a desired position and direction. When the desired position of the first pipe end is set, the first curved pipe is clamped to the exhaust manifold.

The second curved pipe 14 is mounted to the muffler 18 of the exhaust system in an adjustable manner. The second curved pipe can be rotated with respect to the muffler such that the position of the second pipe end can be set in a desired position and direction. When the desired position of the second pipe end is set, the second curved pipe is clamped to the muffler.

When the engine is mounted on the chassis, and the muffler is mounted on the chassis, at least one of the first curved pipe and the second curved pipe is adjustable. The purpose of this is to align the two pipe ends to each other, such that the pipe ends are aligned on the same central axis, i.e. that the pipe ends are parallel and concentric. By aligning the two pipe ends to each other, it is ensured that the flexible tube can be mounted between the two curved pipes in a straight and stress free manner. This will in turn ensure that the forces acting on the flexible tube are minimized and that the deflections of the flexible tube are minimized. This will prolong the life of the flexible tube.

In a normal production flow, the first curved pipe is mounted and clamped to the exhaust manifold or a turbo in one mounting cycle. The second curved pipe is mounted and clamped to the muffler of the exhaust system in another mounting cycle, and the muffler may be assembled at another mounting station before it is mounted to the chassis. The operator tries to position the first and the second curved pipe in a desired position as good as possible, e.g. by experience, but without an alignment guide, it is difficult to set the pipe ends in an exact position. Further, the desired position of the second pipe end of the second curved pipe is dependent on the position of the first pipe end of the first curved pipe. Thus, the end result is often that the two pipe ends are not aligned to each other. There may be an offset of several millimetres or more in any direction, sometimes more and sometimes less. The alignment tolerance for a given flexible tube may e.g. be 3 millimetres. This means that for some exhaust system installations, the flexible tube will be mounted between the two curved pipes in an oblique manner, in which there is a sideway load on the flexible tube when the vehicle is standing still and the engine is not running. When the vehicle starts moving, there will be an excessive load on the flexible tube in some directions, which will lead to increased wear and a reduced life for the flexible tube.

By using the alignment tool when mounting the flexible tube between the two curved pipes, this misalignment can be avoided. In this method, the first curved pipe is mounted to the exhaust manifold in one mounting cycle. The first curved pipe may be mounted to the exhaust manifold in a fixed or adjustable manner. The second curved pipe is mounted to the muffler of the exhaust system in another mounting cycle, and is mounted in an adjustable manner to the muffler. When the engine and the muffler are in place in the vehicle, the flexible tube is attached between the first curved pipe and the second curved pipe. The alignment tool is attached to the flexible tube in a removable manner with an attachment means, e.g. a cable tie or a strap. The flexible tube is now securely held in a straight state by the alignment tool, and will not deflect from the straight state during the clamping of the curved pipes. With the flexible tube in a straight state, the first curved pipe and thus the first pipe end can be aligned to a desired position and can then be clamped to the exhaust manifold, if it is not fixedly mounted in a predefined position. The second curved pipe and thus the second pipe end can be aligned to the first pipe end and can then be clamped to the muffler. With the two pipe ends aligned to each other, the flexible tube can be clamped to the first pipe end and to the second pipe end, or to the second pipe end if the flexible tube is fixedly attached to the first pipe end. The alignment toll may be removed from the flexible tube before or after the flexible tube has been clamped to the pipe ends.

The alignment tool is attached to the flexible tube with an attachment means in a removable manner. The attachment means may be disposable or reusable. In one example, the alignment tool is attached to the flexible tube with a disposable cable tie. The cable tie is strong enough to hold the flexible tube in a straight state during the mounting process. The alignment tool may also be attached to the flexible tube with a reusable strap having e.g. a quick release buckle. The alignment tool may also be attached to the flexible tube with two or more attachment means.

The alignment tool is in one example provided with a handle that simplifies the handling of the alignment tool. The handle may be provided with an opening through which the attachment means can be threaded. The alignment tool is in one example provided with protrusions or edges at the ends of the alignment tool, extending from the inner surface of the alignment tool. The protrusions are adapted to correspond with the end regions of the flexible tube, which e.g. are stiff flanges. This will ensure that the alignment tool is positioned in the proper lengthwise position on the flexible tube.

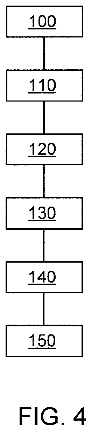

Fig. 4 shows a schematic flow chart of one example of the method for mounting a flexible tube between a first pipe end and a second pipe end. The flexible tube is mounted with the aid of an alignment tool that is attached to the flexible tube. The alignment tool holds the flexible tube in a straight state during the mounting of the flexible tube.

In step 100, the flexible tube is placed between the first pipe end and the second pipe end. The flexible tube is placed with its flanges extending over the pipe ends, either on the inside or on the outside of the pipe ends, such that the flexible tube is held in position between the two pipe ends. The flexible tube may be fixedly attached to one of the pipe ends.

In step 110, the alignment tool is attached to the flexible tube with an attachment means in a removable manner, such that the flexible tube is held in a straight state.

In step 120, the first pipe end is aligned to the second pipe end such that they are aligned to each other. Depending on the mounting process, either one or both of the pipe ends are adjusted in order to align the pipe ends to each other.

In step 130, the first pipe end, the second pipe end or both pipe ends are clamped in the aligned position, depending on how the curved pipes of the pipe ends are mounted.

In step 140, the flexible tube is clamped to one or both of the pipe ends.

In step 150, the alignment tool is removed from the flexible tube.

The invention is not to be regarded as being limited to the embodiments described above, a number of additional variants and modifications being possible within the scope of the subsequent patent claims.

### REFERENCE SIGNS

- 1:: Alignment tool
- 2:: Body
- 3:: First end of body
- 4:: Second end of body
- 5:: Handle
- 6:: First protrusion
- 7:: Second protrusion
- 8:: Flexible tube
- 9:: First pipe end
- 10:: Second pipe end
- 11:: Attachment means
- 12:: Inner side
- 13:: First curved pipe
- 14:: Second curved pipe
- 15:: Exhaust manifold
- 16:: Muffler

## Claims

1. Alignment tool (1) for mounting a flexible tube (8) between a first pipe end (9) and a second pipe end (10), where the alignment tool (1) is adapted to be used to align the first pipe end (9) to the second pipe end (10), **characterized in that** the alignment tool (1) is provided with a single semi-circular body (2) having a diameter corresponding to the diameter of the flexible tube (8), where the length of the alignment tool (1) corresponds to the length of the flexible tube (8), and that the alignment tool (1) is adapted to bear on the flexible tube (8) during the mounting of the flexible tube (8) between the first pipe end (9) and the second pipe end (10).

2. Alignment tool according to claim 1, wherein the alignment tool (1) comprises an attachment means (11) adapted to hold the alignment tool (1) to the flexible tube (8) in a removable manner.

3. Alignment tool according to claim 1 or 2, wherein the attachment means (11) is a disposable cable tie.

4. Alignment tool according to claim 1 or 2, wherein the attachment means (11) is a reusable strap.

5. Alignment tool according to claim 4, wherein the reusable strap comprises a quick release buckle.

6. Alignment tool according to any of claims 1 to 5, wherein the alignment tool comprises two attachment means (11).

7. Alignment tool according to any of claims 1 to 6, wherein the surface of the single semi-circular body (2) is closed.

8. Alignment tool according to any of claims 1 to 7, wherein an inner side (12) of the single semi-circular body (2) comprises a first protrusion (6) at a first end (3) and a second protrusion (7) at a second end (4).

9. Alignment tool according to claim 8, wherein the first protrusion (6) and the second protrusion (7) are semi-circular.

10. Alignment tool according to any of claims 1 to 9, wherein the alignment tool (1) is provided with a handle (5).

11. Method for mounting a flexible tube (8) between a first pipe (9) end and a second pipe end (10), comprising the following steps:
- placing the flexible tube (8) between the first pipe (9) end and the second pipe end (10),
- attaching an alignment tool (1) according to claim 1 to the flexible tube (8) with an attachment means (11) in a removable manner, such that the flexible tube (8) is held in a straight position,
- aligning the first pipe end (8) to the second pipe end (9) by adjusting the position of at least one pipe end (9, 10), such that they are aligned to each other,
- clamping at least one pipe end (9, 10) in the aligned position,
- clamping the flexible tube (8) to at least one pipe end (9, 10), and
- removing the alignment tool (1) from the flexible tube (8).

12. Method according to claim 11, wherein the alignment tool (1) is attached to the flexible tube (8) with a disposable cable tie.

13. Method according to claim 11, wherein the alignment tool (1) is attached to the flexible tube (8) with a reusable strap.

14. Method according to claim 11, wherein the alignment tool (1) is attached to the flexible tube (8) with a reusable strap provided with a quick release buckle.

15. Method according to any of claims 11 to 14, wherein the alignment tool (1) is attached to the flexible tube (8) with two attachment means.

## Patentansprüche

1. Ausrichtwerkzeug (1) zum Montieren eines Flexschlauchs (8) zwischen einem ersten Rohrende (9) und einem zweiten Rohrende (10), wobei das Ausrichtwerkzeug (1) dazu angepasst ist, dazu verwendet zu werden, das erste Rohrende (9) mit dem zweiten Rohrende (10) auszurichten, **dadurch gekennzeichnet, dass** das Ausrichtwerkzeug (1) mit einem einzigen halbkreisförmigen Körper (2) bereitgestellt ist, der einen Durchmesser aufweist, der dem Durchmesser des Flexschlauchs (8) entspricht, wobei die Länge des Ausrichtwerkzeugs (1) der Länge des Flexschlauchs (8) entspricht, und dadurch, dass das Ausrichtwerkzeug (1) dazu angepasst ist, während des Montierens des Flexschlauchs (8) zwischen dem ersten Rohrende (9) und dem zweiten Rohrende (10) auf dem Flexschlauch (8) aufzuliegen.

2. Ausrichtwerkzeug nach Anspruch 1, wobei das Ausrichtwerkzeug (1) ein Anbringungsmittel (11) umfasst, das dazu angepasst ist, das Ausrichtwerkzeug (1) auf entfernbare Weise an dem Flexschlauch (8) zu halten.

3. Ausrichtwerkzeug nach Anspruch 1 oder 2, wobei das Anbringungsmittel (11) ein Einweg-Kabelbinder ist.

4. Ausrichtwerkzeug nach Anspruch 1 oder 2, wobei das Anbringungsmittel (11) ein wiederverwendbarer Riemen ist.

5. Ausrichtwerkzeug nach Anspruch 4, wobei der wiederverwendbare Riemen einen Schnellverschluss umfasst.

6. Ausrichtwerkzeug nach einem der Ansprüche 1 bis 5, wobei das Ausrichtwerkzeug zwei Anbringungsmittel (11) umfasst.

7. Ausrichtwerkzeug nach einem der Ansprüche 1 bis 6, wobei die Oberfläche des einzigen halbkreisförmigen Körpers (2) geschlossen ist.

8. Ausrichtwerkzeug nach einem der Ansprüche 1 bis 7, wobei eine Innenseite (12) des einzigen halbkreisförmigen Körpers (2) einen ersten Vorsprung (6) an einem ersten Ende (3) und einen zweiten Vorsprung (7) an einem zweiten Ende (4) umfasst.

9. Ausrichtwerkzeug nach Anspruch 8, wobei der erste Vorsprung (6) und der zweite Vorsprung (7) halbkreisförmig sind.

10. Ausrichtwerkzeug nach einem der Ansprüche 1 bis 9, wobei das Ausrichtwerkzeug (1) mit einem Griff (5) bereitgestellt ist.

11. Verfahren zum Montieren eines Flexschlauchs (8) zwischen einem ersten Rohrende (9) und einem zweiten Rohrende (10), umfassend die folgenden Schritte:
- Platzieren des Flexschlauchs (8) zwischen dem ersten Rohrende (9) und dem zweiten Rohrende (10),
- Anbringen eines Ausrichtwerkzeugs (1) nach Anspruch 1 auf entfernbare Weise mit einem Anbringungsmittel (11) an dem Flexschlauch (8), sodass der Flexschlauch (8) in einer geraden Position gehalten wird,
- Ausrichten des ersten Rohrendes (8) mit dem zweiten Rohrende (9) durch Einstellen der Position von mindestens einem Rohrende (9, 10), sodass diese miteinander ausgerichtet sind,
- Festklemmen mindestens eines Rohrendes (9, 10) in der ausgerichteten Position,
- Festklemmen des Flexschlauchs (8) an mindestens einem Rohrende (9, 10) und
- Entfernen des Ausrichtwerkzeugs (1) von dem Flexschlauch (8).

12. Verfahren nach Anspruch 11, wobei das Ausrichtwerkzeug (1) mit einem Einweg-Kabelbinder an dem Flexschlauch (8) angebracht ist.

13. Verfahren nach Anspruch 11, wobei das Ausrichtwerkzeug (1) mit einem wiederverwendbaren Riemen an dem Flexschlauch (8) angebracht ist.

14. Verfahren nach Anspruch 11, wobei das Ausrichtwerkzeug (1) mit einem wiederverwendbaren Riemen, der mit einem Schnellverschluss bereitgestellt ist, an dem Flexschlauch (8) angebracht ist.

15. Verfahren nach einem der Ansprüche 11 bis 14, wobei das Ausrichtwerkzeug (1) mit zwei Anbringungsmitteln an dem Flexschlauch (8) angebracht ist.

## Revendications

1. Outil d'alignement (1) pour le montage d'un tube flexible (8) entre une première extrémité de tuyau (9) et une seconde extrémité de tuyau (10), où l'outil d'alignement (1) est conçu pour être utilisé pour aligner la première extrémité de tuyau (9) à la seconde extrémité de tuyau (10), **caractérisé en ce que** l'outil d'alignement (1) est pourvu d'un corps semi-circulaire unique (2) ayant un diamètre correspondant au diamètre du tube flexible (8), où la longueur de l'outil d'alignement (1) correspond à la longueur du tube flexible (8), et **en ce que** l'outil d'alignement (1) est conçu pour s'appuyer sur le tube flexible (8) lors du montage du tube flexible (8) entre la première extrémité de tuyau (9) et la seconde extrémité de tuyau (10).

2. Outil d'alignement selon la revendication 1, dans lequel l'outil d'alignement (1) comprend un moyen de fixation (11) conçu pour maintenir l'outil d'alignement (1) sur le tube flexible (8) de manière amovible.

3. Outil d'alignement selon la revendication 1 ou 2, dans lequel le moyen de fixation (11) est un serre-câble jetable.

4. Outil d'alignement selon la revendication 1 ou 2, dans lequel le moyen de fixation (11) est une sangle réutilisable.

5. Outil d'alignement selon la revendication 4, dans lequel la sangle réutilisable comprend une boucle à déclenchement rapide.

6. Outil d'alignement selon l'une quelconque des revendications 1 à 5, dans lequel l'outil d'alignement comprend deux moyens de fixation (11).

7. Outil d'alignement selon l'une quelconque des revendications 1 à 6, dans lequel la surface du corps semi-circulaire unique (2) est fermée.

8. Outil d'alignement selon l'une quelconque des revendications 1 à 7, dans lequel un côté intérieur (12) du corps semi-circulaire unique (2) comprend une première saillie (6) au niveau d'une première extrémité (3) et une seconde saillie (7) au niveau d'une seconde extrémité (4).

9. Outil d'alignement selon la revendication 8, dans lequel la première saillie (6) et la seconde saillie (7) sont semi-circulaires.

10. Outil d'alignement selon l'une quelconque des revendications 1 à 9, dans lequel l'outil d'alignement (1) est pourvu d'une poignée (5).

11. Procédé de montage d'un tube flexible (8) entre une première extrémité de tuyau (9) et une seconde extrémité de tuyau (10), comprenant les étapes suivantes de :
- placement du tube flexible (8) entre la première extrémité de tuyau (9) et la seconde extrémité de tuyau (10),
- fixation d'un outil d'alignement (1) selon la revendication 1 au tube flexible (8) avec un moyen de fixation (11) de manière amovible, de sorte que le tube flexible (8) soit maintenu en position droite,
- alignement de la première extrémité de tuyau (8) à la seconde extrémité de tuyau (9) en ajustant la position d'au moins une extrémité de tuyau (9, 10), de sorte qu'elles soient alignées l'une par rapport à l'autre,
- serrage d'au moins une extrémité de tuyau (9, 10) dans la position alignée,
- serrage du tube flexible (8) sur au moins une extrémité de tuyau (9, 10), et
- retrait de l'outil d'alignement (1) du tube flexible (8) .

12. Procédé selon la revendication 11, dans lequel l'outil d'alignement (1) est fixé au tube flexible (8) par un serre-câble jetable.

13. Procédé selon la revendication 11, dans lequel l'outil d'alignement (1) est fixé au tube flexible (8) par une sangle réutilisable.

14. Procédé selon la revendication 11, dans lequel l'outil d'alignement (1) est fixé au tube flexible (8) par une sangle réutilisable pourvue d'une boucle à déclenchement rapide.

15. Procédé selon l'une quelconque des revendications 11 à 14, dans lequel l'outil d'alignement (1) est fixé au tube flexible (8) par deux moyens de fixation.
